# EUROPEAN PATENT SPECIFICATION

(11) **EP 3 984 729 B1**
(45) Date of publication and mention of the grant of the patent: **09.10.2024**
(21) Application number: 20822548.2
(22) Date of filing: 11.06.2020
(51) Int. Cl.: B29D 30/06, C08J 7/00, C08J 7/12, B29D 30/00

(54) **METHOD FOR CLEANING TIRE AND METHOD FOR MANUFACTURING TIRE**
VERFAHREN ZUR REIFENREINIGUNG UND VERFAHREN ZUR REIFENHERSTELLUNG
PROCÉDÉ DE NETTOYAGE DE PNEU ET PROCÉDÉ DE FABRICATION DE PNEU

(30) Priority: 11.06.2019 JP 2019108872; 21.11.2019 JP 2019210355
(43) Date of publication of application: 20.04.2022
(73) Proprietor: The Yokohama Rubber Co., Ltd., Hiratsuka-shi, Kanagawa 254-8601 (JP)
(72) Inventor: OKAMATSU Takahiro, Hiratsuka-shi, Kanagawa 254-8601 (JP); SAIKI Takeaki, Hiratsuka-shi, Kanagawa 254-8601 (JP)
(74) Representative: Dilg, Haeusler, Schindelmann Patentanwaltsgesellschaft mbH
(86) International application number: PCT/JP2020/022981
(87) International publication number: WO 2020/250964

(56) References cited:
- WO-A1-2016/060235
- WO-A1-2017/082162
- JP-A- 2002 036 813
- JP-A- 2005 350 057
- JP-A- 2005 350 057
- JP-A- 2010 069 828
- JP-A- 2010 069 828
- JP-A- 2011 224 954
- JP-A- 2015 214 065
- JP-A- 2017 105 270
- JP-A- 2020 082 934
- JP-A- H09 216 960
- JP-A- S5 443 999
- US-A1- 2007 044 894
- US-A1- 2010 243 127
- US-A1- 2016 064 195
- US-A1- 2018 045 611
- US-A1- 2019 160 895

## Description

### Technical Field

The present invention relates to a method for cleaning a tire and a method for manufacturing a tire. More specifically, the present invention relates to a method for cleaning a tire, capable of reliably removing unnecessary deposits on the tire surface without damaging the rubber on the tire surface using plasma treatment and a method for manufacturing a tire to which this cleaning method is applied.

### Background Art

A release agent used in a manufacturing process is adhered to a tire surface. Since it is difficult to bond a sound absorptive member or the like to the tire surface with such a release agent adhered thereto, a method of removing the release agent from the tire surface has been proposed (see Patent Literature 1). In the method proposed in Patent Literature 1, the release agent is removed by irradiating the tire surface with a laser beam.

However, since the output energy of the laser beam is high, the rubber on the tire surface to which the release agent is adhered is also removed together with the release agent (see paragraph [0006] and the like). That is, there is a problem that healthy rubber that does not need to be removed is removed and the tire surface is damaged. Since unnecessary deposits other than the release agent are adhered to the tire surface, there is room for improvement in reliably removing these deposits without damaging the rubber on the tire surface.

### Citation List

### Patent Literature

Patent Literature 1: JP 2015-214065 A
Patent literature 2 : JP 2010 069828 A, which discloses similar features to those of the preamble of independent claim 1.

### Summary of Invention

### Technical Problem

An object of the present invention is to provide a method for cleaning a tire, capable of reliably removing unnecessary deposits on a tire surface without damaging the rubber on the tire surface using plasma treatment, and a method for manufacturing a tire to which this cleaning method is applied.

### Solution to Problem

In order to achieve the above object, a method for cleaning a tire of the present invention is a method for cleaning a tire for removing deposits being unnecessary and adhering to a predetermined range by irradiating the predetermined range of a tire surface with plasma from an irradiation head, the method including: identifying irradiation conditions of plasma in which rubber on the tire surface in the predetermined range is not damaged by the irradiated plasma in advance and irradiating plasma from the irradiation head to the predetermined range under the irradiation conditions identified in advance to remove the deposits. The actual method according to the invention is defined in independent claim 1.

A method for manufacturing a tire of the present invention includes bonding the predetermined attachment to the predetermined range cleaned by the above-mentioned method for cleaning a tire by an adhesive.

### Advantageous Effects of Invention

According to the method for cleaning a tire of the present invention, plasma having lower output strength (output energy) than a laser beam and extremely high safety is used. Moreover, the plasma is irradiated from the irradiation head to the predetermined range under the irradiation conditions that are known in advance so that the rubber on the tire surface is not damaged by the plasma irradiation. In this way, it is possible to reliably remove unnecessary deposits such as a release agent adhering to the tire surface without damaging the rubber on the tire surface.

According to the method for manufacturing a tire of the present invention, a predetermined attachment is bonded to a predetermined range which has been cleaned by the method for cleaning a tire and from which unnecessary deposits have been removed, by an adhesive. Therefore, it is advantageous to firmly fix the bonded deposits to the predetermined range for a long period of time. Along with this, it is possible to prevent a problem that the fixed attachment is separated from the tire surface.

### Brief Description of Drawings

FIG. 1 is an explanatory view illustrating a tire in which an attachment is bonded to an inner surface of the tire in a cross-sectional view.
FIG. 2 is an explanatory view illustrating the inner surface of the tire of FIG. 1 in a plan view.
FIG. 3 is an explanatory view illustrating a tire cleaning system used in the present invention.
FIG. 4 is an explanatory view illustrating a tire inner surface cleaning step in a cross-sectional view of the tire.
FIG. 5 is an explanatory view illustrating the cleaning process of FIG. 4 in a top view.
FIG. 6 is an explanatory view illustrating the movement of an irradiation head in a plan view of the inner surface of the tire.
FIG. 7 is an explanatory view illustrating a modified example of the tire inner surface cleaning process in a cross-sectional view of the tire.
FIG. 8 is an explanatory view illustrating a step of bonding an attachment to the cleaned inner surface of the tire in a cross-sectional view of the tire.

### Description of Embodiments

A method for cleaning a tire and a method for manufacturing a tire of the present invention will be described on the basis of the embodiment illustrated in the drawings.

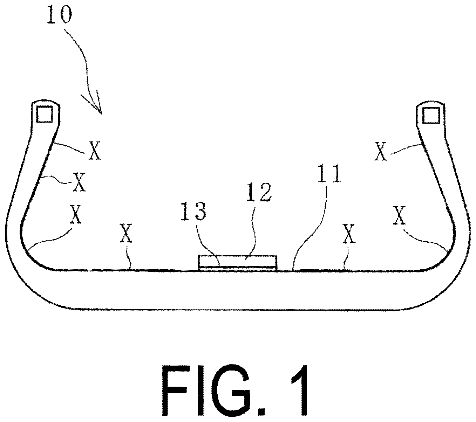

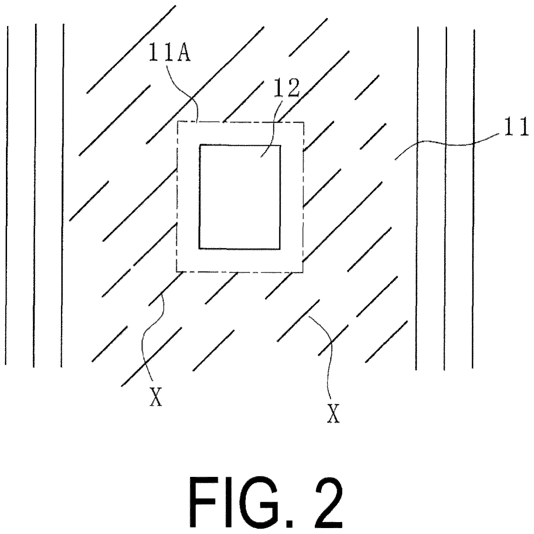

In the method for manufacturing a tire of the present invention, a tire 10 illustrated in FIGS. 1 and 2 is manufactured. A predetermined attachment 12 is bonded to a predetermined range 11A of an inner surface 11 of the tire 10 by an adhesive 13. In this embodiment, a pressure sensor for detecting the tire internal pressure is bonded as the attachment 12. Other examples of the attachment 12 include sensors such as a temperature sensor and a sound absorptive member such as sponge. The adhering surface of the attachment 12 with the predetermined range 11A is formed of a resin or the like, which is a different material from the rubber in the predetermined range 11A. In the drawings, unnecessary deposits X remaining on and adhering to the inner surface 11 are schematically illustrated by diagonal lines.

Further, as the attachment 12, a sealing material arranged inside the tire 10 in order to prevent air leakage from the tire 10 when the tire 10 steps on a nail can be exemplified. Some of such puncture-preventing sealing materials have adhesiveness by themselves.

In the method for cleaning a tire of the present invention, unnecessary deposits X adhering to the predetermined range 11A are removed in order to bond the attachment 12 to the predetermined range 11A or to bond them more firmly. Examples of the deposits X include a release agent used in the manufacturing process of the tire 10 and oil that inhibits the bonding of the attachment 12.

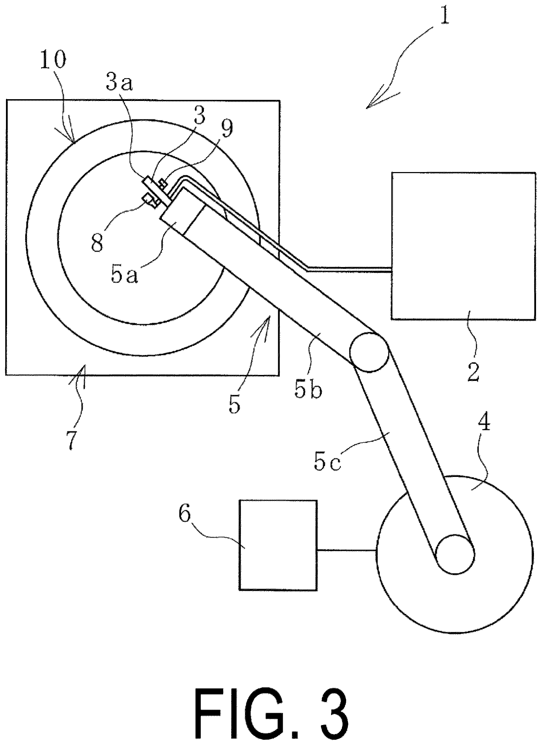

In order to remove such deposits X, a tire cleaning system 1 illustrated in FIGS. 3 to 6 is used. The cleaning system 1 includes a plasma source supply device 2, an irradiation head 3 that irradiates plasma P, an arm 5 that holds the irradiation head 3, and a control device 6 that controls the movement of the arm 5. In this embodiment, a rotation mechanism 7 for rotating the tire 10, a camera 8, and a temperature sensor 9 are further provided.

The predetermined range 11A to be cleaned is a desired range of the inner surface 11 or an outer surface of the tire 10. In this embodiment, a case where the predetermined range 11A exists on the inner surface 11 will be described as an example, but for example, the predetermined range 11A may exist on the outer surface (a tire side portion or the like) of the tire 10. Alternatively, a wide range such as the entire inner surface 11 of the tire 10 and the inner surface 11 corresponding to a tread portion (a range continuous to the entire circumference in the circumferential direction) may be the predetermined range 11A.

The irradiation head 3 includes an induction coil to which high-frequency power is supplied, and irradiates the plasma P with set output strength. This plasma P is generated by applying electromagnetic energy (high-frequency power) to a known reaction gas supplied from the plasma source supply device 2. By adjusting the magnitude of the applied electromagnetic energy (frequency of high-frequency power), the output strength of the plasma P can be set to a desired magnitude.

The plasma P is irradiated to the predetermined range 11A under the atmospheric pressure from an irradiation port 3a at the tip of the irradiation head 3. Since the irradiation port 3a has a small diameter, in order to clean the predetermined range 11A, it is necessary to dispose the irradiation port 3a by moving the irradiation port 3a above the predetermined range 11A. That is, it is necessary to move the irradiation head 3 and the tire 10 relative to each other.

Therefore, in this embodiment, the irradiation head 3 is held by the arm 5 that moves freely. The arm 5 is rotatably attached to an arm base 4, and is configured by rotatably connecting a plurality of arm portions 5a, 5b, and 5c. The irradiation head 3 is detachably attached to the tip of the arm 5. Therefore, by controlling the movement of the arm 5 by the control device 6, the irradiation head 3 can be freely moved in three dimensions, and the irradiation direction of the plasma P can be set to a discretionary direction.

In this embodiment, the tire 10 is rotatably held around the tire axis by the rotation mechanism 7. The movement of the rotation mechanism 7 is controlled by the control device 6, and the tire 10 can be moved in a discretionary rotation direction at a discretionary rotation speed by a discretionary rotation angle. It is sufficient that the irradiation head 3 and the tire 10 can be moved in relation to each other, so that the irradiation port 3a can be moved above the predetermined range 11A so as to cover the entire predetermined range 11A. Therefore, it is sufficient that at least one of the arm 5 and the rotation mechanism 7 is provided.

A digital video camera or the like is used for the camera 8 that acquires the image data of the inner surface 11 of the tire 10. By attaching the camera 8 to the tip of the irradiation head 3 or the arm 5, it is possible to sequentially acquire the image data of the predetermined range 11A irradiated with the plasma P. The acquired image data is input to and stored in the control device 6.

The temperature sensor 9 sequentially detects the temperature of the predetermined range 11A irradiated with the plasma P. A non-contact type sensor such as thermography is used for the temperature sensor 9. In this embodiment, the temperature sensor 9 is attached to the irradiation head 3, but can also be attached to the tip of the arm 5. The temperature data detected by the temperature sensor 9 is input to and stored in the control device 6. The camera 8 and the temperature sensor 9 can be optionally provided.

Next, a procedure for cleaning the inner surface 11 of the tire 10 using this cleaning system 1 will be described.

First, the irradiation conditions of the plasma P are set in advance. Therefore, using a tire having the identical specifications as the tire 10 to be cleaned or a rubber sample similar thereto, the rubber surface is irradiated with plasma P from the irradiation head 3 under the atmospheric pressure to find out the irradiation conditions under which the rubber on the rubber surface is not damaged.

Specifically, since there is an output strength of the plasma P required to remove unnecessary deposits X, the output strength of the plasma P is set to a predetermined value within the range of the required output strength. Then, the output strength of the plasma P is set to this predetermined value, the separation interval d between the irradiation port 3a and the rubber surface in the predetermined range 11A and irradiation time t of the plasma P are set to be different, and the predetermined range 11A is irradiated with the plasma P in a pinpoint manner without moving the irradiation head 3 and the tire 10 in relation to each other. After that, the predetermined range 11A irradiated with the plasma P is observed, and the removal state of the deposits X adhering to the predetermined range 11A and the damage state of the rubber on the rubber surface in the predetermined range 11A are observed.

The removal state of the deposits X is determined, for example, by measuring the water contact angle of the rubber surface. In a state in which a release agent or the like is adhered to the rubber surface, the water contact angle is about 110° or more and 130° or less, but when such deposits X are removed, the water contact angle decreases. Therefore, for example, when the water contact angle is 80° or less, more preferably 75° or less, it is determined that the deposits X are completely removed.

The damage state of the rubber is observed with a microscope or the like to identify whether or not the shape of the rubber surface is different from the shape of the rubber surface in the peripheral portion not irradiated with the plasma P. If the difference between the two shapes cannot be identified, it is determined that the rubber has not been damaged.

In this way, the irradiation conditions of the plasma P (predetermined value of output strength, separation interval d, and allowable range of irradiation time t) under which the deposits X can be removed without damaging the rubber on the rubber surface are identified in advance. The predetermined value of the output strength is, for example, about 200 kHz or more and 500 kHz or less in terms of the frequency of the high-frequency power to be supplied. The separation distance d is, for example, about 10 mm or more and 30 mm or less, and the irradiation time t is, for example, about 5 seconds or more and 60 seconds or less.

The data necessary for operating the cleaning system 1 within the allowable range of the identified irradiation conditions is input to the control device 6. Within the allowable range of the irradiation conditions, the irradiation head 3 and the tire 10 may be moved in relation to each other so that the cleaning of the entire predetermined range 11A can be completed in a shorter time.

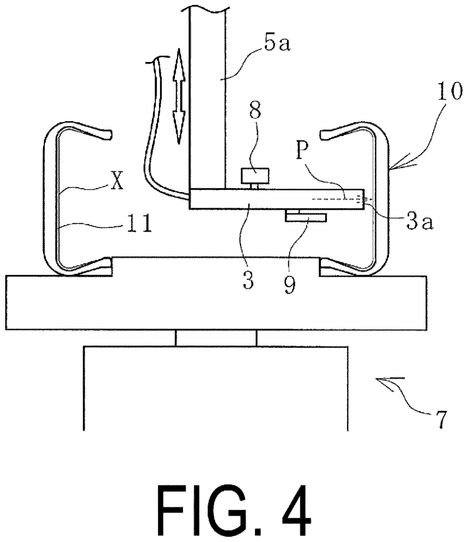

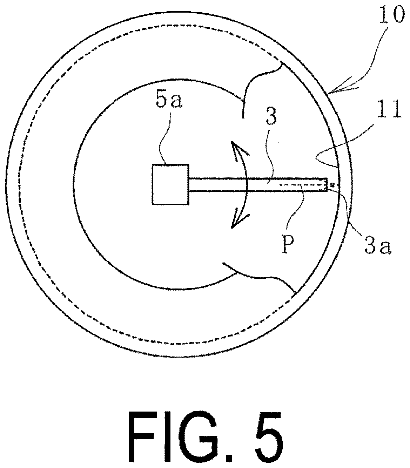

Next, in the cleaning system 1, the plasma P is irradiated from the irradiation head 3 to the predetermined range 11A under the atmospheric pressure under the above-described irradiation conditions identified in advance while moving at least one of the tire 10 to be cleaned and the irradiation head 3 continuously or intermittently. In this embodiment, as illustrated in FIGS. 4 and 5, the movement of the arm 5 is controlled to move the irradiation head 3 along the inner surface 11 while maintaining the tire 10 at a predetermined position without rotating the tire 10 with the tire 10 in a horizontal state. Using the arm 5 that can be freely moved in three dimensions, the irradiation head 3 can be accurately moved along the curved surface shape of the inner surface 11 of the tire 10. The tire 10 may be in a vertical state.

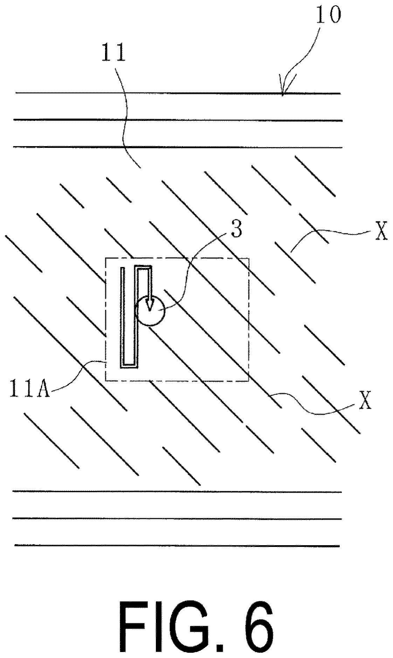

While moving the irradiation head 3 intermittently or continuously as illustrated in FIG. 6, the plasma P is irradiated from the irradiation head 3 to the predetermined range 11A. The deposits X adhering to the predetermined range 11A are decomposed and vaporized by the irradiated plasma P, and are removed from the predetermined range 11A. In this way, the predetermined range 11A is in a cleaned state to which no deposits X are adhered.

Here, in order to suppress the irradiation unevenness of the plasma P, the moving direction of the irradiation head 3 and the irradiation direction of the plasma P may be controlled so that the separation interval d between the irradiation port 3a and the tire surface in the predetermined range 11A are maintained constant. The moving speed when the irradiation head 3 is moved intermittently or continuously may be constant so that the entire predetermined range 11A is covered.

In this embodiment, the image data of the predetermined range 11A irradiated with the plasma P is sequentially acquired, and the removal state of the deposits X can be identified by the control device 6 on the basis of the acquired image data. The location where the deposits X are adhered has a slight difference in the surface color of the predetermined range 11A as compared with the location where the deposits X are not adhered. Therefore, the removal state of the deposits X can be determined by distinguishing the difference in thread of the surface by the color (shade) in the image data. Even if the deposits X have a transparent color, by irradiating the predetermined range 11A with light, it becomes easy to clarify the difference in the surface color of the predetermined range 11A.

Therefore, the allowable range in the image data of the surface color (shade) of the predetermined range 11A to which the deposits X are not adhered is set in advance. Then, if the surface color (shade) of the predetermined range 11A in the acquired image data is within this allowable range, it is determined that the deposits X have been removed. If it is out of the allowable range, it is determined that the deposits X are not removed.

The relative movement of the irradiation head 3 and the tire 10 is controlled on the basis of the removal state of the deposits X identified in this way. In this embodiment, the coordinate data of the location where it is determined that the deposits X have not been removed is stored in the control device 6. Then, the irradiation head 3 is moved again to the location so as to be irradiated with the plasma P.

Further, in this embodiment, the surface temperature of the predetermined range 11A irradiated with the plasma P can be sequentially detected by the temperature sensor 9. The allowable temperature is input to the control device 6 in advance. This allowable temperature is set to a predetermined temperature (for example, 70°C or less) at which the rubber on the rubber surface in the predetermined range 11A is not immediately deformed or deteriorated.

When the surface temperature of the predetermined range 11A detected by the temperature sensor 9 exceeds a preset allowable temperature, the irradiation of plasma P is interrupted. For example, even if unintended deposits X are adhered and react violently when irradiated with the plasma P and the temperature becomes higher than expected, according to this configuration, the predetermined range 11A will not be overheated by the irradiated plasma P. That is, it is possible to prevent a problem that the rubber surface in the predetermined range 11A is damaged by the plasma P.

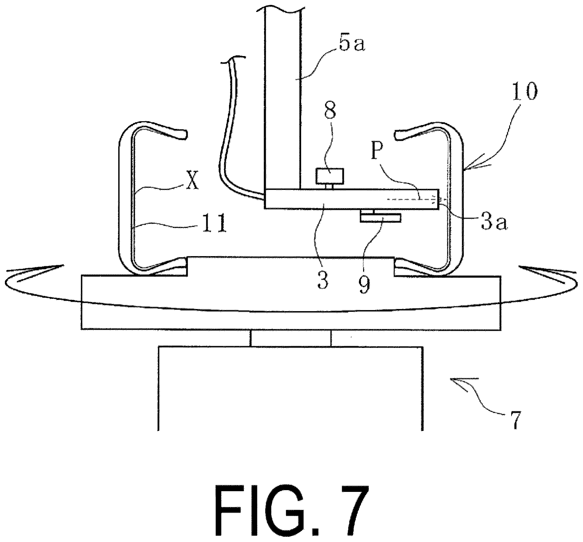

As illustrated in FIG. 7, the rotation mechanism 7 can be used to irradiate the predetermined range 11A with the plasma P while rotating the tire 10 at a predetermined position. That is, the irradiation head 3 can be fixed without being moved, and the tire 10 can be continuously or intermittently rotated by the rotation mechanism 7 to change the relative positions of both. Alternatively, the relative positions of both can be changed continuously or intermittently by moving the irradiation head 3 and rotating the tire 10.

In the method for cleaning a tire described above, the plasma P, which has lower output energy than a laser beam and has remarkably high safety, is used. Therefore, large-scale equipment for preventing danger is unnecessary. Moreover, the irradiation conditions under which the rubber in the predetermined range 11A is not damaged by the irradiation of the plasma P are identified in advance, and under these irradiation conditions, the predetermined range 11A is irradiated with the plasma P under the atmospheric pressure while moving at least one of the tire 10 and the irradiation head 3 continuously or intermittently.

Therefore, unnecessary deposits X such as a release agent adhering to the tire surface in the predetermined range 11A can be reliably removed without damaging the rubber on the tire surface. That is, by removing substantially only the deposits X, the rubber on the healthy tire surface can be maintained in the initial state without causing deformation, deterioration, or the like. When the plasma P is irradiated to remove the deposits X, no smoke or offensive odor is generated. Therefore, from this viewpoint, the equipment can be significantly simplified as compared with the case of using a laser beam.

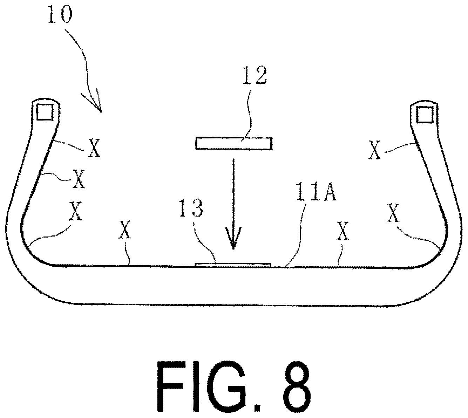

After cleaning the predetermined range 11A in this way, as illustrated in FIG. 8, the predetermined attachment 12 is bonded to the predetermined range 11A by the adhesive 13. In the predetermined range 11A, unnecessary deposits X are removed and the water contact angle is reduced. That is, since the predetermined range 11A is adhesively activated, the bonded attachment 12 can be firmly fixed to the predetermined range 11A for a long period of time. Along with this, it is advantageous to prevent a problem that the fixed attachment 12 is separated from the predetermined range 11A during use of the tire 10.

Further, even immediately after the cleaning for removing the deposits X, the adhesive 13 can be applied to the predetermined range 11A to bond the attachment 12 to the predetermined range 11A. Therefore, the tire 10 in which the attachment 12 is bonded to the predetermined range 11A can be manufactured with high productivity. In order to avoid adhesion of dust and the like floating in the air to the predetermined range 11A from which the deposits X have been removed, the attachment 12 may be bonded immediately after cleaning the predetermined range 11A. When the attachment 12 is a sealing material or the like having adhesiveness by itself, the attachment 12 is directly bonded to the cleaned predetermined range 11A without using the adhesive 13.

### Examples

Experiments were performed using PFW10 manufactured by Plazma Treat as a plasma irradiation instrument on the rubber surface on the inner surface of a typical passenger vehicle tire under the following irradiation conditions using seven different irradiation times as indicated in Table 1 (test samples 1 to 7). A release agent was adhered to the inner surface of the tire irradiated with plasma. The plasma output strength (frequency of high-frequency power) was set to 230 kHz, and the separation interval between the irradiation port of the irradiation head for irradiating the plasma and the rubber surface was maintained at about 20 mm to continue irradiating a predetermined location with the plasma.

The water contact angles of the rubber surface before plasma irradiation (test sample 1) and after irradiation were compared to confirm the removal state of deposits after plasma irradiation. In addition, the rubber surfaces before plasma irradiation (test sample 1) and after irradiation were observed with a microscope to confirm the damage state of the rubber on the rubber surface after plasma irradiation. These results are listed in Table 1.

The smaller the value of the water contact angle, the more cleanly the deposits are removed, and if it is 80° or less, it can be determined that the cleaning is practically good. If there is no difference in the damage state of the rubber on the rubber surface from that before irradiation, it can be determined that the rubber is not damaged.

**[Table 1]**

| | Test sample | | | | | | |
|---|---|---|---|---|---|---|---|
| | 1 | 2 | 3 | 4 | 5 | 6 | 7 |
| Plasma irradiation time (sec) | 0 | 10 | 20 | 30 | 40 | 50 | 60 |
| Water contact angle (°) | 117 | 116 | 110 | 80 | 76 | 70 | 70 |
| Removal state of deposits | NG | NG | NG | Good | Good | Good | Good |
| Presence of rubber damage | - | No | No | No | No | No | No |

From the results in Table 1, it can be seen that by appropriately setting the irradiation time of plasma irradiation, unnecessary deposits on the rubber surface can be reliably removed without damaging the rubber on the tire surface.

### Reference Signs List

1 Cleaning system
2 Plasma source supply device
3 Irradiation head
3a Irradiation port
4 Arm base
5 Arm
5A, 5b, 5c Arm portion
6 Control device
7 Rotation mechanism
8 Camera
9 Temperature sensor
10 Tire
11 Inner surface
11A Predetermined range
12 Attachment
13 Adhesive
P Plasma
X Deposits

## Claims

1. A method for cleaning a tire (10) for removing deposits (X) being unnecessary and adhering to a predetermined range (11A) by irradiating the predetermined range (11A) of a tire surface with plasma (P) from an irradiation head (3),
**characterized in that** the method comprises
using a tire having identical specifications as the tire (10) to be cleaned or a rubber sample similar thereto, the output strength of the plasma (P) is set to a predetermined value within the range of a required output strength of the plasma (P) required to remove the unnecessary deposits (X),
setting the separation interval (d) between an irradiation port (3a) of the irradiation head (3) and a rubber surface of the tire in the predetermined range (11A) and the irradiation time (t) of the plasma (P) to be different,
irradiating with the plasma (P) in a pinpoint manner without moving the irradiation head (3) and the rubber surface in the predetermined range (11A) in relation to each other,
observing the predetermined range (11A) irradiated with the plasma (P), and
based on observation results of the removal state of the deposits (X) adhering to the predetermined range (11A) and the damage state of the rubber on the rubber surface in the predetermined range (11A),
identifying an allowable range for each of the predetermined value of the output strength, the separation interval (d) and the irradiation time (t) as the irradiation conditions of plasma (P) in which rubber on the tire surface in the predetermined range (11A) is not damaged by the irradiated plasma (P) in advance and irradiating plasma (P) from the irradiation head (3) to the predetermined range (11A) of the tire (10) to be cleaned under the allowable range of irradiation conditions identified in advance to remove the deposits (X).

2. The method for cleaning a tire according to claim 1, wherein the predetermined range (11A) is an inner surface (11) of the tire (10).

3. The method for cleaning a tire according to claim 1 or 2, wherein relative movement of the irradiation head (3) and the tire (10) is controlled so that the separation interval (d) is maintained constant.

4. The method for cleaning a tire (10) according to any one of claims 1 to 3, wherein image data of the predetermined range (11A) irradiated with plasma (P) is acquired sequentially, a removal state of the deposits (X) is identified on a basis of the acquired image data, and relative movement of the irradiation head (3) and the tire (10) is controlled on a basis of a result that has been identified.

5. A method for manufacturing a tire, the method comprising cleaning a tire (10) by the method according to any one of claims 1 to 4 and bonding a predetermined attachment (12) to the predetermined range (11A) by an adhesive.

6. A method for manufacturing a tire, the method comprising cleaning a tire (10) by the method according to any one of claims 1 to 4 and bonding a predetermined attachment (12) having adhesiveness directly to the predetermined range.

## Patentansprüche

1. Verfahren zum Reinigen eines Reifens (10) zum Entfernen von Ablagerungen (X), die unnötig sind, und unter Einhaltung eines vorher festgelegten Bereichs (11A), durch Bestrahlen des vorher festgelegten Bereichs (11A) einer Reifenoberfläche mit Plasma (P) aus einem Bestrahlungskopf (3),
**dadurch gekennzeichnet, dass** das Verfahren umfasst
unter Verwendung eines Reifens, der identische Beschreibungen wie der zu reinigende Reifen (10) oder eine ähnliche Gummiprobe davon aufweist, wobei die Ausgangsstärke des Plasmas (P) auf einen vorher festgelegten Wert innerhalb des Bereichs einer erforderlichen Ausgangsstärke des Plasmas (P) eingestellt wird, die erforderlich ist, um die unnötigen Ablagerungen (X) zu entfernen,
Einstellen des Abstandsintervalls (d) zwischen einer Bestrahlungsöffnung (3a) des Bestrahlungskopfes (3) und einer Gummioberfläche des Reifens in dem vorher festgelegten Bereich (11A), und wobei die Bestrahlungszeit (t) des Plasmas (P) unterschiedlich sein soll,
Bestrahlen mit dem Plasma (P) auf eine punktgenaue Weise, ohne Bewegen des Bestrahlungskopf (3) und der Gummioberfläche in dem vorher festgelegten Bereich (11A) in Relation zueinander,
Beobachten des vorher festgelegten Bereichs (11A), der mit dem Plasma (P) bestrahlt wird,
und
basierend auf Beobachtungsergebnissen des Entfernungszustands der Ablagerungen (X), unter Einhaltung des vorher festgelegten Bereich (11A), und des Beschädigungszustands des Gummis auf der Gummioberfläche in dem vorher festgelegten Bereich (11A),
Identifizieren eines zulässigen Bereichs für jeden der vorher festgelegten Werte der Ausgabestärke, des Trennungsintervalls (d) und der Bestrahlungszeit (t) :bf
als die Bestrahlungsbedingungen von Plasma (P), bei denen Gummi auf der Reifenoberfläche in dem vorher festgelegten Bereich (11A) durch das bestrahlte Plasma (P) im Voraus nicht beschädigt wird, und Bestrahlen mit Plasma (P) aus dem Bestrahlungskopf (3) des vorher festgelegten Bereichs (11A) des zu reinigenden Reifens (10) unter dem zulässigen Bereich der Bestrahlungsbedingungen, die im Voraus identifiziert werden, um die Ablagerungen (X) zu entfernen.

2. Verfahren zum Reinigen eines Reifens nach Anspruch 1, wobei der vorher festgelegte Bereich (11A) eine Innenoberfläche (11) des Reifens (10) ist.

3. Verfahren zum Reinigen eines Reifens nach Anspruch 1 oder 2, wobei die Relativbewegung des Bestrahlungskopfs (3) und des Reifens (10) gesteuert wird, sodass der Trennungsabstand (d) konstant gehalten wird.

4. Verfahren zum Reinigen eines Reifens (10) nach einem der Ansprüche 1 bis 3, wobei Bilddaten des vorher festgelegten Bereichs (11A), der mit Plasma (P) bestrahlt wird, sequenziell erfasst werden, ein Entfernungszustand der Ablagerungen (X) auf der Basis der erfassten Bilddaten identifiziert wird und eine Relativbewegung des Bestrahlungskopfs (3) und des Reifens (10) auf der Basis eines Ergebnisses, das identifiziert wurde, gesteuert wird.

5. Verfahren zum Herstellen eines Reifens, das Verfahren umfassend das Reinigen eines Reifens (10) durch das Verfahren nach einem der Ansprüche 1 bis 4 und das Binden einer vorher festgelegten Befestigung (12) an dem vorher festgelegten Bereich (11A) durch ein Haftmittel umfasst.

6. Verfahren zum Herstellen eines Reifens, das Verfahren umfassend das Reinigen eines Reifens (10) durch das Verfahren nach einem der Ansprüche 1 bis 4 und das Binden einer vorher festgelegten Befestigung (12) mit Haftfähigkeit direkt an dem vorher festgelegten Bereich.

## Revendications

1. Procédé de nettoyage d'un pneu (10) permettant d'éliminer les dépôts (X) inutiles et adhérant à une plage prédéterminée (11A) en irradiant la plage prédéterminée (11A) d'une surface de pneu avec du plasma (P) à partir d'une tête d'irradiation (3),
**caractérisé en ce que** le procédé comprend
l'utilisation d'un pneu ayant des spécifications identiques à celles du pneu (10) à nettoyer ou un échantillon de caoutchouc similaire, la puissance de sortie du plasma (P) est réglée à une valeur prédéterminée dans la plage de puissance de sortie du plasma (P) requise pour éliminer les dépôts inutiles (X),
le réglage de l'intervalle de séparation (d) entre un port d'irradiation (3a) de la tête d'irradiation (3) et une surface en caoutchouc du pneu dans la plage prédéterminée (11A) et le temps d'irradiation (t) du plasma (P) de manière à ce qu'ils soient différents,
l'irradiation avec le plasma (P) de manière ponctuelle sans déplacer la tête d'irradiation (3) et la surface en caoutchouc dans la plage prédéterminée (11A) l'une par rapport à l'autre,
l'observation de la plage prédéterminée (11A) irradiée par le plasma (P),
et
sur la base des résultats de l'observation de l'état d'élimination des dépôts (X) adhérant à la plage prédéterminée (11A) et de l'état d'endommagement du caoutchouc sur la surface du caoutchouc dans la plage prédéterminée (11A),
l'identification d'une plage admissible pour chacune de la valeur prédéterminée de la puissance de sortie, de l'intervalle de séparation (d) et du temps d'irradiation (t) en tant que conditions d'irradiation du plasma (P) dans lequel le caoutchouc sur la surface du pneu dans la plage prédéterminée (11A) n'est pas endommagé par le plasma irradié (P) à l'avance et l'irradiation du
:bf
plasma (P) à partir de la tête d'irradiation (3) vers la plage prédéterminée (11A) du pneu (10) à nettoyer dans la plage admissible des conditions d'irradiation identifiées à l'avance pour éliminer les dépôts (X).

2. Procédé de nettoyage d'un pneu selon la revendication 1, dans lequel la plage prédéterminée (11A) est une surface intérieure (11) du pneu (10).

3. Procédé de nettoyage d'un pneu selon la revendication 1 ou 2, dans lequel le mouvement relatif de la tête d'irradiation (3) et du pneu (10) est commandé de manière à ce que l'intervalle de séparation (d) soit maintenu constant.

4. Procédé de nettoyage d'un pneu (10) selon l'une quelconque des revendications 1 à 3, dans lequel les données d'image de la plage prédéterminée (11A) irradiée par le plasma (P) sont acquises séquentiellement, un état d'élimination des dépôts (X) est identifié sur la base des données d'image acquises, et le mouvement relatif de la tête d'irradiation (3) et du pneu (10) est commandé sur la base d'un résultat qui a été identifié.

5. Procédé de fabrication d'un pneu, le procédé comprenant le nettoyage d'un pneu (10) par le procédé selon l'une quelconque des revendications 1 à 4 et le collage d'un accessoire prédéterminé (12) sur la plage prédéterminée (11A) au moyen d'un adhésif.

6. Procédé de fabrication d'un pneu, le procédé comprenant le nettoyage d'un pneu (10) par le procédé selon l'une quelconque des revendications 1 à 4 et le collage d'un accessoire prédéterminé (12) ayant une adhésivité directe sur la plage prédéterminée.
